# EUROPEAN PATENT APPLICATION

(11) **EP 4 340 241 A1**
(43) Date of publication of application: **20.03.2024**
(21) Application number: 22425042.3
(22) Date of filing: 14.09.2022
(51) Int. Cl.: H04B 7/04

(54) **WAIC COMMUNICATION SYSTEM ARCHITECTURE**

(71) Applicant: Arinc Incorporated, Annapolis, MD 21401 (US)
(72) Inventor: Manica, Luca, 38062 Arco (TN) (IT); Carloni, Marco, 00193 Roma (RM) (IT)
(74) Representative: Hughes, Andrea Michelle

(57) **Abstract**

A wireless communication system architecture for communicating data between one or more first data points and one or more second data points via a wireless communication link extending from a first end to which the one or more first data points are connected and a second end to which the one or more second data points are connected, wherein the wireless communication link comprises a first RF communication channel and a second RF communication channel and wherein the first RF communication channel is independent from the second RF communication channel, and wherein the same data is transmitted from the one or more first data points to the one or more second data points along both the first RF communication channel and the second RF communication channel.

## Description

### TECHNICAL FIELD

The present disclosure is concerned with wireless communication e.g. the field of wireless avionics intra-communication (WAIC) and a system architecture to implement such communication.

### BACKGROUND

Advances in communication technology have enabled wireless communication to be used in many areas, thus avoiding the need for wires, which can restrict where such communication can take place, add weight and complexity to communication systems and introduce physical points of failure due to faults in, or damage to the wires. One field in which wireless communication has provided particular advantages is in the avionics field. Within an aircraft, it is often necessary or required to provide communication between various points, for example to obtain information from various sensors and provide this to a central point e.g. to the pilot. An example of such communication is in monitoring the state of the aircraft landing gear. Different sensors monitor e.g. brake conditions, oil pressure and tyre pressure, and the system provides real-time information to the pilot.

Because of the many electrical systems, sensors and actuators in an aircraft, communication via wire would require extensive and complex wiring. This takes up valuable space and adds to the weight in the aircraft. Furthermore, reconfiguring the communication system would require extensive rewiring/re-routing of wires. The reliability of these communication systems depends on the state and integrity of the wires and connections, which can result in failure.

Recently, to address such issues, wireless communication has found application in aircraft systems. Such communication systems are known as WAIC (Wireless avionics intra-communication) and provide wireless communication between two or more points on a single aircraft. A WAIC forms part of a closed, exclusive network for operation of the aircraft. WAICs are typically short range communication systems with lower power requirements, which transmit data from a transmitter to a receiver. They can be easily reconfigured and so the same device can be used for transmitting different data typologies. By having different routes for different networks, WAIC can provide enhanced reliability. In aircraft, for example, WAIC systems can be used in non-safety-critical applications such as counting/monitoring boarding passengers etc. where some communication latency can be tolerated and failure of communication would not have catastrophic consequences.

Industry standards and safety regulations set standards for avionics communication systems. According to these standards, known WAIC systems can currently only be used for non-safety-critical applications, due to the fact that they may introduce some latency in the communication of the data and may be subjected to interference from other communication links. The communication channel between the transmitter and the receiver provides a single point of failure. For safety-critical applications, e.g. anti-skid control, such systems do not satisfy the standard requirements of low latency and high reliability/need for redundancy. Therefore, safety-critical applications on aircraft are not currently able to benefit from the advantages provided by WAIC. As a result, such applications require wires which result in more weight and hence more fuel burned by the aircraft, as well as being less robust due to the possibility of the wire connectors breaking.

There is, therefore, a desire to be able to expand the use of WAIC for use in more avionics systems including safety-critical systems.

### SUMMARY

The invention provides a wireless communication system for e.g. aircraft which incorporates redundancy and separation techniques in antenna system design.

According to the invention, there is provided a wireless communication system architecture for communicating data between one or more first data points and one or more second data points via a wireless communication link extending from a first end to which the one or more first data points are connected and a second end to which the one or more second data points are connected, wherein the wireless communication link comprises a first RF communication channel and a second RF communication channel and wherein the first RF communication channel is independent from the second RF communication channel, and wherein the same data is transmitted from the one or more first data points to the one or more second data points along both the first RF communication channel and the second RF communication channel.

### BRIEF DESCRIPTION

Examples according to the disclosure will now be described with reference to the drawings. It should be noted that these are examples only and that variations are possible within the scope of the claims.
Figure 1 is a high-level diagram illustrating the concept according to this disclosure.
Figure 2 shows an example architecture design according to the disclosure.
Figures 3A to 3D show alternative antenna systems that may be used in the architecture of the disclosure.
Figure 4 is shown to illustrate an example of polarised antennas.
Figure 5 illustrates an example of a possible antenna structure for use with an architecture of the disclosure.
Figures 6A and 6B are used to illustrate linear polarisation as can be used in an example according to the disclosure.
Figures 7A and 7B are used to illustrate circular polarisation as can be used in an example according to the disclosure.
Figure 8 shows a possible X-polarised antenna design for use in an architecture according to the disclosure.
Figure 9 shows a possible Y-polarised antenna design for use in an architecture according to the disclosure.
Figure 10 shows a possible antenna array geometry for use with the architecture of the disclosure.
Figure 11 shows a single antenna element system for use with an architecture of the disclosure.
Figure 12 shows an antenna array system for use with an architecture of the disclosure.
Figure 13 shows an application of the architecture of the disclosure for brake control systems.
Figure 14 illustrates the wireless communication in an example application as in Fig. 13.

### DETAILED DESCRIPTION

The architecture according to this disclosure provides a redundant wireless communication architecture for low latency, high reliability date transmission, making it useful for a wider range of applications, including at least some safety-critical avionic applications.

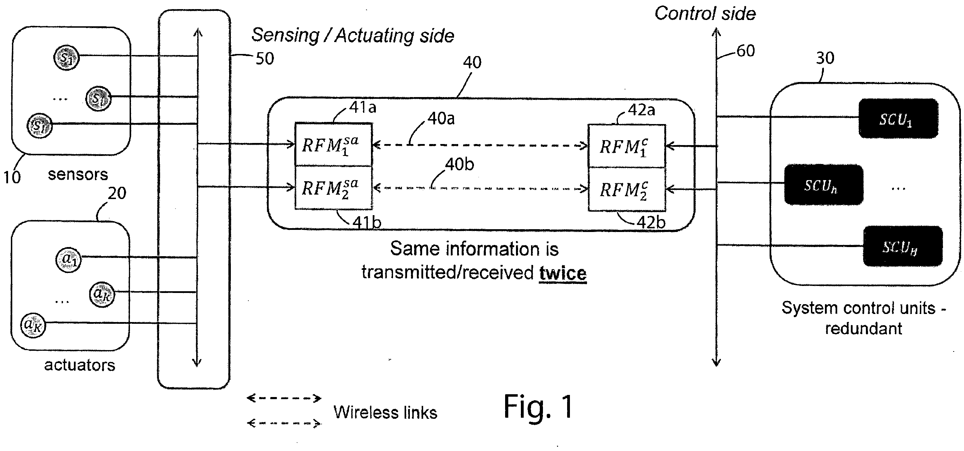

Figure 1 is a high-level diagram of a wireless communication architecture according to this disclosure. The communication architecture provides communication between two or more points in a system such as an aircraft. In this example, data is transmitted from one or more sensors 10 (Si, Sᵢ, Sₗ) and/or actuators 20 (a₁, aₖ, a_{K}) on a sensing/actuating side of the system, to one or more points 30 e.g. system control units SCU₁, SCUₕ, SCU_{H} on a control side, and vice versa, via a communication link 40. In the example shown, several sensors and/or actuators send data across the communication link and are connected to the communication link via a bus 50. Fewer or more, or different combinations of data transmission points may be provided in other examples. The data transmission points may be connected to the communication link in ways other than via a bus, e.g. by point-to-point connection. Similarly, the receiving points 30 are shown here connected to the communication link via a bus 60 but, again, they may be connected in other ways and may include fewer of more, or different types of receiving points than shown. In the example shown, the wireless link is bidirectional and so sensor data, actuator data and control data can be sent from and received at either or both of the ends of the communication link. The two channel wireless transmission of the disclosure will also be beneficial in unidirectional transmission.

The communication link 40 comprises two distinct wireless data channels 40a, 40b which each transmit the same data across the communication link from a radio frequency, RF, module 41a, 41b at the transmission end (the sensing/actuating side) to an RF module 42a, 42b at the receiving end (control side). Thus, according to the architecture of the disclosure, the same information is transmitted and received twice.

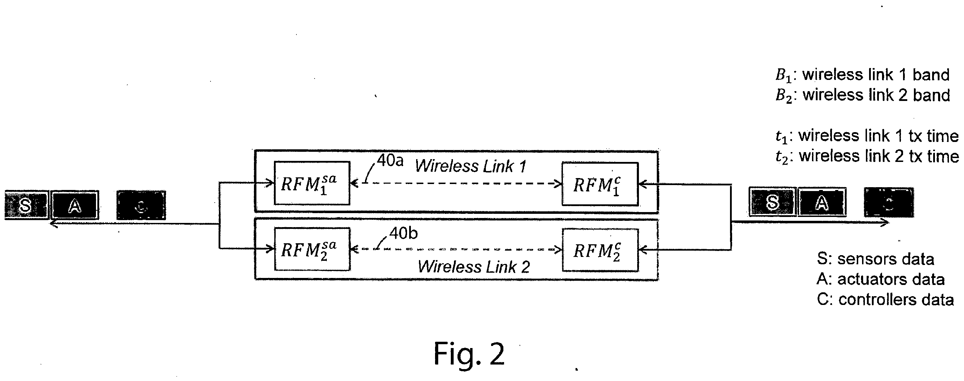

Figure 2 shows an example of the two distinct wireless data channels in more detail. There are various ways in which the two channels can be 'distinct' or 'separate' or 'independent' (these terms being used interchangeably in this application) within the disclosure. The separation may be a physical and spatial separation - i.e. the two channels 40a, 40b are spaced a physical distance apart. Alternatively, or in addition, the separation may be in terms of bandwidth. Data may be transmitted on the first channel 40a in a first frequency band B₁ and on the second channel 40b in a second, different, frequency band B₂. The difference in the two frequency bands should be greater than the coherence bandwidth of the channel so that the two wireless channels are independent, but the channels should operate closely enough to have the same behaviour e.g. if 'fading' (a deep null in the channel response) is present for some frequency values, both channels will experience this.

Alternatively, or in addition to one or both of the above methods of 'separation', the channels may be 'independent' or 'separated' in that the data is transmitted with a time offset or delay i.e. data on the first channel 40a is transmitted at a time tidifferent from the timing t₂ of data transmission on the second channel. Again, the time difference should be greater than a predetermined threshold to avoid cross-channel interference.

Because the same data is transmitted on two independent channels, the overall probability of failure of the link 40- i.e. the likelihood of a data packet not being correctly delivered, is the product of the probability of failure of the two channels (plus the probability of AND gate failure). Tests have shown that by using two channels for transmitting the same data, sufficiently low probabilities of failure can be achieved for the system to satisfy the standards of reliability for at least some safety-critical applications.

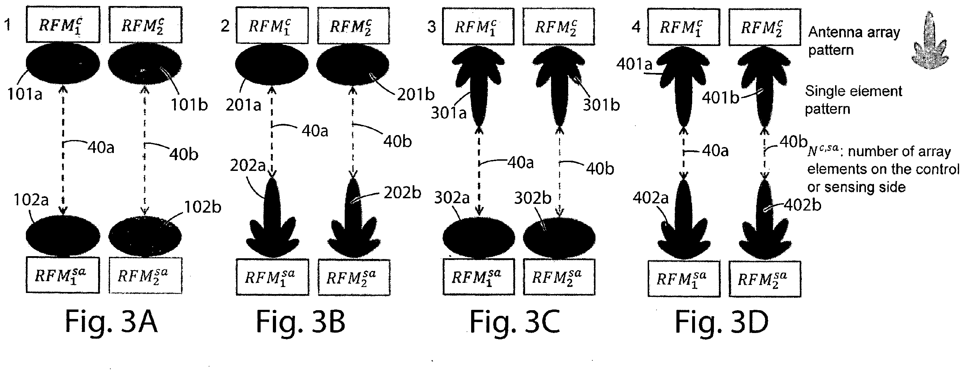

Referring to Figs 3A to 3D, different types of antenna or antenna systems may be used to improve the reliability of the data transmission but improved performance may be at the cost of simplicity and low weight. There is, therefore, a trade-off to be made and various factors relating to how the system is to be used will determine the type of antenna to be used. Some possible examples are shown in Figs. 3A to 3D.

In the example of Fig. 3A, each channel 40a, 40b has a single simple antenna 101a, 101b, 102a, 102b at each end of the communication link. This is advantageous in terms of simplicity but has relatively low gain and is therefore less power efficient.

In the example shown in Fig. 3B, a single simple antenna 201a, 201b is provided for each channel at the control end while an antenna array 202a, 202b is provided for each channel at the sensor/actuator end. In the example of Fig. 3C, a single simple antenna 302a, 302b is provided for each channel at the sensor/actuator end while an antenna array 301a, 301b is provided for each channel at the control end. These examples have the advantage that the signal-to-noise ratio SNR is increased and interference nulling is possible. The arrangement is, however, more complex and requires a beamforming network.

Figure 3D shows the most complex, but best quality, in terms of SNR, arrangement having an antenna array 401a, 401b, 402a, 402b at each end of the channels.

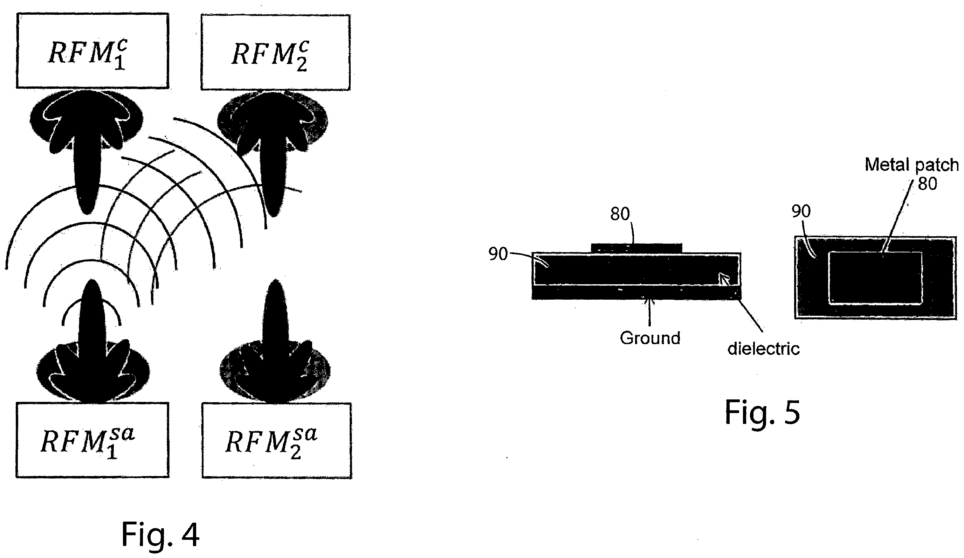

Another way of providing or improving (together with one or more of the previous 'separations') the separation between the two channels is by using polarised antennas as explained with reference to Fig. 4. Even if the first and second channels send data in different frequency bands B₁, B₂, and/or at different times, and/or are physically separated by a relatively large distance, interference may still arise (i.e. the RF module at one end of one of the channels may pick up data being transmitted on the other channel as represented in Fig. 4). This can be mitigated or avoided by using polarised antennas which are directed to pick up data from the opposing polarised antenna of the same channel. The antennas of the two channels have orthogonal polarisations - i.e. the polarisation of the antennas of one channel is orthogonal to that of the antennas of the other channel.

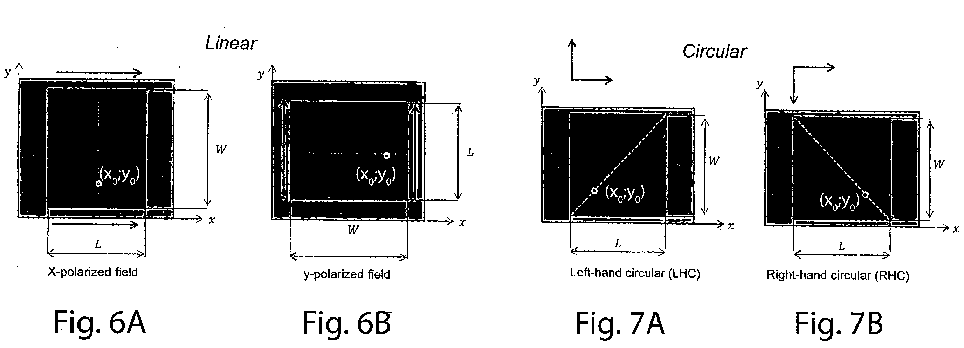

The polarisation of the antennas may be linear or circular. This is described further below with reference to Figs. 6A, 6B, 7A, 7B, 8 and 9.

By way of example, patch antennas such as shown in Fig. 5 may be used for the antenna elements. Such patch antennas comprise a metal 'patch' 80 or plate located on a grounded dielectric substrate 90. Rectangular or circular patches are common, but other shapes are also possible. Such patch antennas are advantageous in many applications because of their simplicity and low profile. It is easy to manufacture such antennas and they can be easily connected/fed and integrated into a PCB. They can be easily combined to form an antenna array. They do, however, have a relatively low bandwidth, low efficiency due to conductor any dielectric losses, are limited to microwave (greater than 1 GHz) frequencies and breakdown at very high power. This is generally not a problem with WAIC, but other types of antenna element may be used.

As mentioned above, the properties of the architecture of this disclosure are improved if the antennas have different polarisations for the two communication channels 40a, 40b. Antennas may be designed with linear (orthogonal) polarisation or circular (left-hand vs. right-hand polarisation).

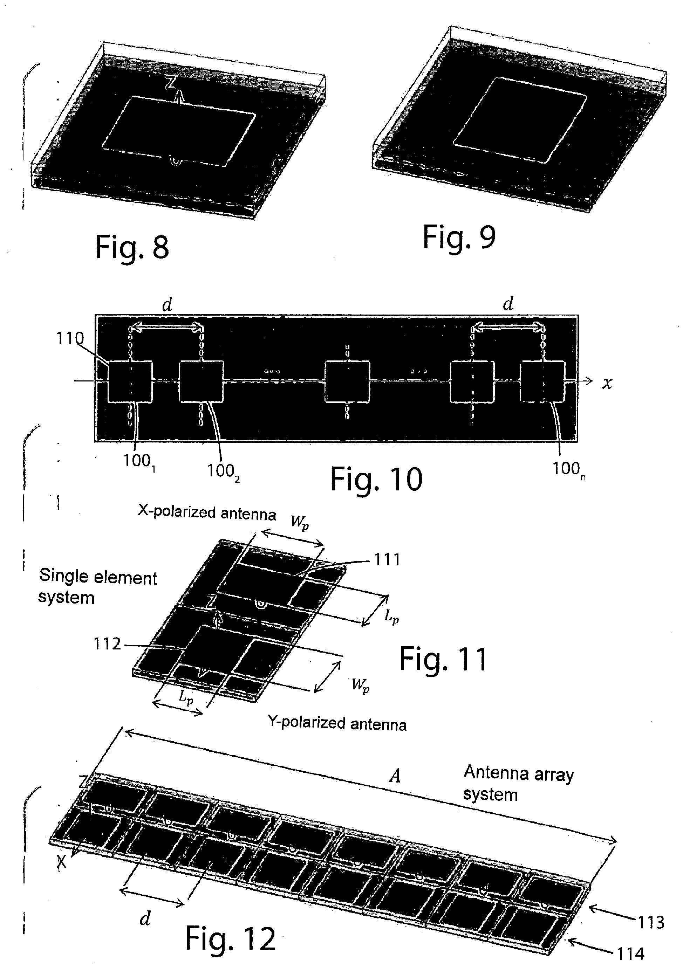

Figs. 6A and 6B show antenna elements having different linear polarisations. The antenna in Fig. 6A is X-polarised and the antenna in Fig. 6B is Y-polarised - i.e. their fields are orthogonal. Figure 8 shows an X-polarised patch antenna design. Fig. 9 shows a Y-polarised patch antenna design in which the X-polarised antenna is rotated 90 degrees.

Figs. 7A and 7B show antenna elements having different circular polarisations. The antenna in Fig. 7A is left-hand circular polarised and the antenna in Fig. 7B is right-hand circular polarised - i.e. the two antennas excite two substantially perpendicular modes in the patch antenna cavity.

Possible designs of antenna arrays for use in the architecture are shown in Figs. 10, 11 and 12.

The antenna array elements 100₁- 100ₙ can lie on a linear, planar or conformal structure, they can be organised in a regular or irregular grid, they can be controlled in amplitude. Many types of antenna array design are known and the most appropriate design can be selected for the application in question, taking into account space and weight constraints. Fig. 10 shows a uniform linear array where the antenna elements 100 are spaced a distance d apart to form a regular or uniform grid. In this example, each antenna element 100 has a control point 110 by means of which the signal amplitude and phase can be controlled. The distance d should be selected to be large enough to reduce mutual coupling between the antenna elements, and because of physical constraints due to the element sizes, but should not be so large that grating lobes arise. The number of antenna elements in the array will also depend on space and weight and power constraints.

Figure 11 shows a single element system where one channel has an X-polarised single antenna element 111 and the other has a Y-polarised element 112. In the example shown in Fig. 12, each channel has an antenna array system. One channel has an array of X-polarised elements 113 and the other channel has an array of Y-polarised antenna elements 114. Again, there is a design trade off between improved performance provided by more elements and increased size and weight.

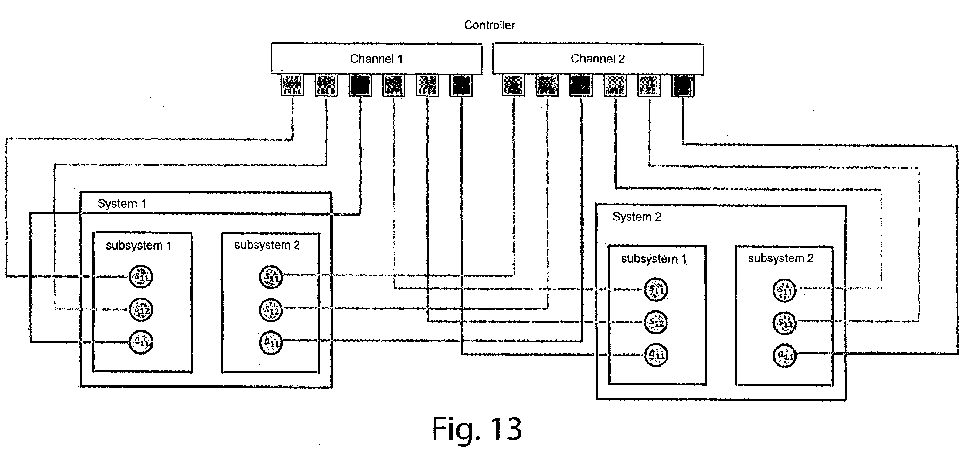

Figure 13 shows one application where the architecture of the disclosure can be advantageously used. The Example shown in a brake control system. The architecture of the disclosure can, of course, be used in many other applications.

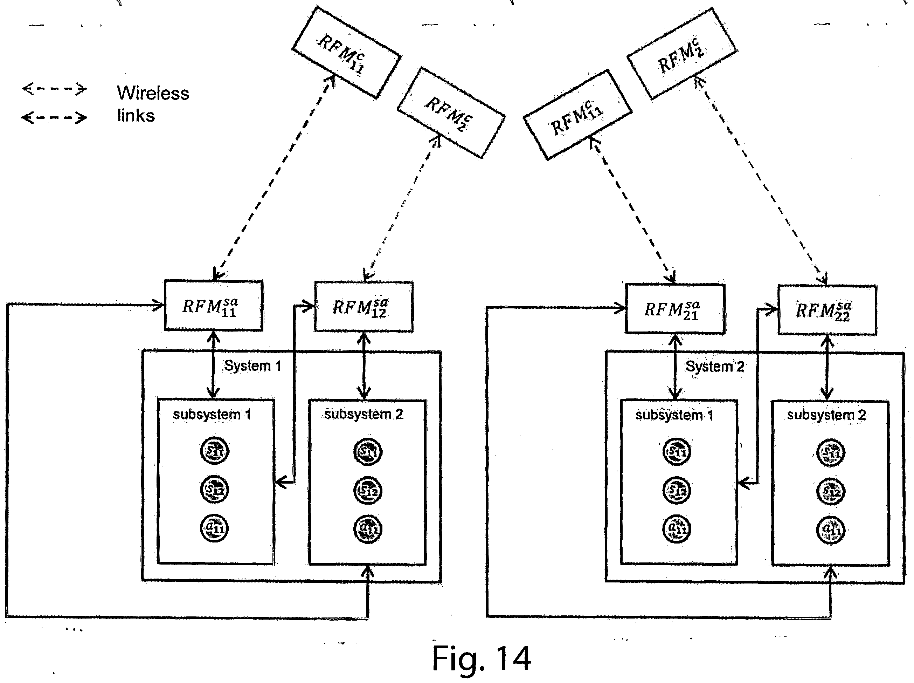

In a brake control unit of an aircraft, various speed, pressure and temperature sensors are provided at various locations on the wheels and brake components. Singles from these sensors are transmitted to the brake control unit on an inboard channel (i.e. from the inboard side of the wheels/brakes) and also on an outboard channel (for the outboard side of the wheels/brakes). Using the present architecture, the signals from all of the sensors can be transmitted, for each of the inboard channel and the outboard channel, on two separate communication channels as seen in Fig. 14. Each of the two RF channels send the same information but separated in frequency and/or time and/or space, and/or with different polarisation of the antennas. As there is no single point of failure, since even one channel alone will provide all of the necessary information for safe braking, the communication over two channels is reliable even for such safety-critical systems. The sensors are connected to the communication channels by wires but the communication across the communication link is wireless.

## Claims

1. A wireless communication system architecture for communicating data between one or more first data points and one or more second data points via a wireless communication link extending from a first end to which the one or more first data points are connected and a second end to which the one or more second data points are connected, wherein the wireless communication link comprises a first RF communication channel and a second RF communication channel and wherein the first RF communication channel is independent from the second RF communication channel, and wherein the same data is transmitted from the one or more first data points to the one or more second data points along both the first RF communication channel and the second RF communication channel.

2. The wireless communication system architecture according to claim 1, wherein the first RF communication channel is independent from the second RF communication channel by being spatially separated therefrom.

3. The wireless communication system architecture according to claim 2, wherein the data is transmitted on the first RF communication channel from a first transmitting antenna to a first receiving antenna and on the second RF communication channel from a second transmitting antenna to a second receiving antenna, and wherein the first receiving antenna is spatially separated from the second transmitting antenna and/or the first receiving antenna is spatially separated from the second receiving antenna.

4. The wireless communication system architecture according to claim 3, wherein the spatial separation is created by beamforming.

5. The wireless communication system architecture according to claim 3, wherein the first transmitting antenna and the second transmitting antenna are orthogonally polarised and/or the first receiving antenna and the second receiving antenna are orthogonally polarised.

6. The wireless communication system architecture according to claim 3, wherein the first transmitting antenna and the second transmitting antenna are orthogonally polarised and/or the first receiving antenna and the second receiving antenna are circularly polarised in opposite directions.

7. The wireless communication system architecture according to any of claims 3 to 6, wherein each of the first transmitting antenna, the second transmitting antenna, the first receiving antenna or the second receiving antenna is a single antenna or an antenna array.

8. The wireless communication system architecture according to any of claims 3 to 7, wherein each of the first transmitting antenna, the second transmitting antenna, the first receiving antenna or the second receiving antenna includes one or more patch antennas.

9. The wireless communication system architecture of any preceding claim, wherein the first RF communication channel is independent from the second RF communication channel by frequency separation, wherein the first RF communication channel transmits at a first frequency and the second RF communication channel transmits at a second frequency separated from the first frequency to avoid spectral overlap.

10. The wireless communication system architecture according to claim 9, wherein the second frequency is separated from the first frequency by at least a coherence bandwidth of a channel.

11. The wireless communication system architecture of any preceding claim, wherein the first RF communication channel is independent from the second RF communication channel by temporal separation, wherein the first RF communication channel transmits at a first time and the second RF communication channel transmits at a second time separated from the first time.

12. The wireless communication system architecture according to claim 11, wherein the second time is separated from the first time by at least a time greater than the coherence time of the channel.

13. A wireless avionics inter-communication, WAIC, system having a wireless communication system architecture as claimed in any preceding claim.

14. An aircraft system having a plurality of data points arranged to communication by a WAIC as claimed in claim 13.

15. A method of data communication between one or more first data points and one or more second data points via a wireless communication link extending from a first end to which the one or more first data points are connected and a second end to which the one or more second data points are connected, the method comprising transmitting the same data from the one or more first data points to the one or more second data points along a first RF communication channel and a second RF communication channel separated from the first RF communication channel.
